# EUROPÄISCHE PATENTSCHRIFT

(11) **EP 2 797 782 B1**
(45) Veröffentlichungstag und Bekanntmachung des Hinweises auf die Patenterteilung: **04.03.2020**
(21) Anmeldenummer: 12810174.8
(22) Anmeldetag: 13.12.2012
(51) Int. Cl.: B60S 1/34, B60S 1/38, B60S 1/08

(54) **WISCHBLATTVORRICHTUNG**
WIPER BLADE DEVICE
DISPOSITIF DE BALAI D'ESSUIE-GLACE

(30) Priorität: 27.12.2011 DE 102011089928
(43) Veröffentlichungstag der Anmeldung: 05.11.2014
(73) Patentinhaber: Robert Bosch GmbH, 70442 Stuttgart (DE)
(72) Erfinder: WILMS, Christian, 3582 Beringen-Koersel (BE)
(86) Internationale Anmeldenummer: PCT/EP2012/075335
(87) Internationale Veröffentlichungsnummer: WO 2013/098083

(56) Entgegenhaltungen:
- EP-A2- 0 283 849
- EP-A2- 0 930 207
- DE-A1- 3 829 465
- DE-C1- 3 515 535
- FR-A1- 2 594 083
- FR-A1- 2 671 319
- FR-A1- 2 918 026

## Beschreibung

Die Erfindung geht aus von einer Wischvorrichtung nach dem Oberbegriff des Patentanspruchs 1.

Aus dem Stand der Technik ist eine Wischvorrichtung mit einer Wischeinheit bekannt, welche an einem Wischarm und/oder an einem Wischblatt angeordnet ist und welche insbesondere ein Spoilerelement und/oder eine Wischleiste und/oder eine Federleiste umfasst.

Aus der DE 38 29 465 A1 ist eine Wischvorrichtung mit den Merkmalen des Oberbegriffs des Anspruchs 1 bekannt. Weiterhin ist aus der EP 0 930 207 A2 eine Wischvorrichtung bekannt, bei der eine Steuereinrichtung mit Hilfe von piezokeramischen Aktoren eine Änderung der Form des Wischerblatts ermöglicht.

### Offenbarung der Erfindung

Die Erfindung geht aus von einer Wischvorrichtung mit zumindest einer an einem Wischarm und/oder an einem Wischblatt angeordneten Wischeinheit, welche insbesondere ein Spoilerelement und/oder eine Wischleiste und/oder eine Federleiste umfasst.

Es wird vorgeschlagen, dass die Wischvorrichtung wenigstens eine Stelleinheit umfasst, welche dazu vorgesehen ist, zumindest eine Eigenschaft der Wischeinheit abhängig von wenigstens einem Parameter, insbesondere auch von mehreren Parametern gleichzeitig, zumindest teilautomatisiert einzustellen. Unter "vorgesehen" soll hier und im Folgenden insbesondere speziell programmiert und/oder ausgelegt und/oder ausgestattet verstanden werden. Unter einer "Wischeinheit" soll in diesem Zusammenhang insbesondere ein Teil einer Wischvorrichtung, insbesondere einer Wischblattvorrichtung, verstanden werden. Unter einer "Wischleiste" soll in diesem Zusammenhang insbesondere eine Einheit verstanden werden, welche wenigstens eine Wischlippe umfasst, welche in wenigstens einem Betrieb der Wischvorrichtung über eine zu wischende Oberfläche, insbesondere eine Fahrzeugoberfläche und vorzugsweise eine Fahrzeugscheibe, bewegt wird, diese vorzugsweise während einer gesamten Bewegung berührt und besonders vorteilhaft möglichst gleichmäßig an die Oberfläche gepresst wird. Vorzugsweise ist die Wischleiste einstückig ausgestaltet und besteht vorzugsweise aus einem Naturkautschuk und besonders vorteilhaft aus einem synthetischen Kautschuk. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden wie beispielsweise durch eine Herstellung aus einem Guss und/oder durch eine Herstellung in einem Ein- oder Mehrkomponentenspritzverfahren und vorteilhaft aus einem einzelnen Rohling. Unter einem "Spoilerelement" soll insbesondere ein Element verstanden werden, das dazu vorgesehen ist, einen auf die Wischvorrichtung wirkenden Fahrtwind abzuweisen und/oder für ein Anpressen der Wischleiste auf die zu wischende Oberfläche zu nutzen. Vorzugsweise besteht das Spoilerelement zumindest teilweise aus Gummi und/oder aus einem wenigstens teilelastischen Kunststoff. Unter einer "Federleiste" soll in diesem Zusammenhang insbesondere ein Element verstanden werden, das zumindest eine Erstreckung aufweist, die in zumindest einem normalen Betriebszustand um zumindest 10 %, insbesondere um wenigstens 20 %, vorzugsweise um mindestens 30 % und besonders vorteilhaft um zumindest 50 % elastisch veränderbar ist, und das insbesondere eine von einer Veränderung der Erstreckung abhängige Gegenkraft erzeugt, die der Veränderung entgegenwirkt. Unter einer "Erstreckung" eines Elements soll in diesem Zusammenhang insbesondere ein maximaler Abstand zweier Punkte einer senkrechten Projektion des Elements auf eine Ebene verstanden werden. Vorzugsweise besteht die Federleiste teilweise, vorzugsweise zumindest zu einem Großteil und besonders vorteilhaft vollständig aus Federstahl. Darunter, dass die Federleiste "zumindest zu einem Großteil" aus Federstahl besteht, soll insbesondere verstanden werden, dass die Federleiste mit einem Massenanteil von zumindest 50 %, insbesondere von wenigstens 70 %, vorzugsweise von mindestens 90 % und besonders vorteilhaft von zumindest 95 % aus Federstahl besteht. Unter einer "Stelleinheit" soll in diesem Zusammenhang insbesondere eine Einheit verstanden werden, welche in wenigstens einem Betriebszustand eine aktive Einstellung der zumindest einen Eigenschaft der Wischeinheit vornimmt, insbesondere unter Berücksichtigung des wenigstens einen Parameters. Die Stelleinheit kann insbesondere eine Winddruckfläche aufweisen, welche in zumindest einem Betriebszustand durch anströmende Luft bewegt wird, wobei diese Bewegung zu einer Einstellung der Eigenschaft verwendet wird. Die Stelleinheit umfasst insbesondere zumindest ein Stellglied und vorzugsweise zusätzlich eine Steuereinheit, welche insbesondere dazu vorgesehen ist, wenigstens eine Parameterkenngröße zu empfangen und das Stellglied insbesondere basierend auf der Parameterkenngröße zu steuern und/oder zu regeln. Unter einer "Parameterkenngröße" soll in diesem Zusammenhang insbesondere eine den wenigstens einen Parameter kennzeichnende Größe verstanden werden, insbesondere ein elektrisches Signal. Vorzugsweise ist die Stelleinheit als eine separate Einheit und insbesondere von einer Wischarmantriebseinheit zu einem Antrieb des gesamten Wischarms verschieden ausgebildet. Darunter, dass die Stelleinheit dazu vorgesehen ist, die Eigenschaft der Wischeinheit "teilautomatisiert einzustellen", soll insbesondere verstanden werden, dass die Stelleinheit und insbesondere das Stellglied der Stelleinheit dazu vorgesehen ist, eine aktive Einstellung der zumindest einen Eigenschaft vorzunehmen, wobei insbesondere zusätzlich auch ein Handeingriff durch einen Bediener möglich ist, insbesondere elektronisch von einer Fahrgastzelle aus. Unter einer "aktiven Einstellung" soll insbesondere eine Einstellung der zumindest einen Eigenschaft verstanden werden, welche von einer rein passiven, allein durch Umgebungseinflüsse bedingten Eigenschaftsänderung, insbesondere einer allein durch eine Umgebungstemperatur und/oder eine Umgebungsfeuchte und/oder eine Luftanströmgeschwindigkeit und/oder einen Luftanströmdruck und/oder einen Wischblattanpressdruck bedingten Eigenschaftsänderung, verschieden ist. Unter einer "Luftanströmgeschwindigkeit" soll in diesem Zusammenhang insbesondere eine Geschwindigkeit einer Luftströmung relativ zu wenigstens einem Punkt der Wischvorrichtung verstanden werden. Unter einem "Luftanströmdruck" soll insbesondere eine flächenbezogene Kraft verstanden werden, welche in wenigstens einem Betriebszustand durch eine Anströmung einer Einheit, insbesondere der Wischeinheit, auf diese wirkt. Unter einem "Wischblattanpressdruck" soll insbesondere eine flächenbezogene Kraft verstanden werden, durch welche das Wischblatt in zumindest einem Betriebszustand auf die zu wischende Oberfläche gedrückt wird. Durch eine solche Ausgestaltung kann eine gattungsgemäße Wischvorrichtung vorteilhaft weiterentwickelt werden. Ferner kann eine vorteilhafte Anpassung der Wischvorrichtung an in wenigstens einem Betriebszustand vorliegende Bedingungen erfolgen, wodurch insbesondere ein Wischergebnis optimiert werden kann. Des Weiteren kann eine Flüssigkeitsansammlung vorteilhaft vermindert werden, insbesondere wenn eine Position der Wischeinheit verändert wird, wodurch insbesondere Spritzer auf der zu wischenden Oberfläche vermieden werden können.

Ferner wird vorgeschlagen, dass die Stelleinheit dazu vorgesehen ist, wenigstens einen Anstellwinkel und/oder zumindest eine mechanische Vorspannung und/oder wenigstens eine Flexibilität und/oder zumindest eine Position und/oder wenigstens eine Form der Wischeinheit einzustellen. Unter einem "Anstellwinkel" der Wischeinheit soll in diesem Zusammenhang insbesondere ein Winkel zwischen einer Normalen einer Haupterstreckungsebene der Wischeinheit und einer Schwerkraftrichtung verstanden werden. Unter einer "Haupterstreckungsebene" einer Einheit soll insbesondere eine Ebene verstanden werden, die unter allen Ebenen eine größte Menge an Schnittpunkten mit der Einheit aufweist. Sollten mehrere Ebenen eine größte Menge an Schnittpunkten aufweisen, soll insbesondere eine Ebene, welche zumindest die Einheit schneidet und zu allen diesen Ebenen, insbesondere zu Schnittgeraden beliebiger Paare dieser Ebenen, einen geringsten mittleren Abstand aufweist, als Haupterstreckungsebene verstanden werden. Hierdurch kann ein besonders vorteilhaftes Wischergebnis erzielt werden. Insbesondere können ein Wischblattanpressdruck, ein Luftwiderstandsbeiwert und/oder eine Anpassung des Wischblatts an die zu wischende Oberfläche optimiert werden. Ferner kann eine Steifigkeit der Federleiste und/oder der Wischleiste entsprechend an Witterungsbedingungen angepasst werden.

Vorteilhaft ist die Stelleinheit dazu vorgesehen, die Eigenschaft abhängig von zumindest einer Fahrgeschwindigkeit eines Fahrzeugs und/oder wenigstens einer Luftanströmgeschwindigkeit und/oder zumindest einem Luftanströmdruck und/oder wenigstens einem Wischblattanpressdruck und/oder zumindest einem Wischwinkel und/oder wenigstens einer Wischgeschwindigkeit und/oder zumindest einer Wischfrequenz und/oder wenigstens einer anfallenden Flüssigkeitsmenge und/oder zumindest einer Umgebungstemperatur einzustellen. Unter einem "Wischwinkel" soll in diesem Zusammenhang insbesondere ein Winkel zwischen dem Wischarm in dessen Ruhelage und dem Wischarm in einer Auslenkungslage verstanden werden. Unter einer "Ruhelage" des Wischarms soll insbesondere eine eindeutig definierte Lage verstanden werden, in welcher der Wischarm in einem inaktiven Zustand ruht. Unter einer "Wischgeschwindigkeit" soll insbesondere ein Betrag einer maximalen Winkelgeschwindigkeit des Wischarms während zumindest eines Wischvorgangs verstanden werden. Unter einer "Wischfrequenz" soll in diesem Zusammenhang insbesondere eine Anzahl von Wischvorgängen pro Zeitintervall verstanden werden. Hierdurch kann eine Berücksichtigung wichtiger Parameter in zumindest einem Betriebszustand gewährleistet werden.

In einer bevorzugten Ausgestaltung wird vorgeschlagen, dass die Stelleinheit wenigstens eine Aktoreinheit umfasst. Unter einer "Aktoreinheit" soll insbesondere ein Wandler verstanden werden, welcher eine ihm zugeführte Energie, vorzugsweise eine elektrische Energie, in eine mechanische Bewegung und/oder in eine andere, von einer reinen Wärmeenergie verschiedene physikalische Größe umwandelt, insbesondere in einen Flüssigkeits- und/oder Gasdruck. Die Aktoreinheit kann als eine beliebige, dem Fachmann als sinnvoll erscheinende Aktoreinheit ausgebildet sein, insbesondere als eine Hydraulik- und/oder Pneumatikaktoreinheit und/oder als eine Bimetallaktoreinheit und/oder als ein Elektromotor, insbesondere ein Schrittmotor, und/oder als eine Dehnstoffaktoreinheit und/oder eine Magnetostriktionaktoreinheit und/oder als eine Formgedächtnisaktoreinheit und/oder vorzugsweise als eine Piezoaktoreinheit. Unter einer "Hydraulikaktoreinheit" soll insbesondere eine Aktoreinheit verstanden werden, welche in zumindest einem Betriebszustand eine zugeführte Energie, vorzugsweise eine elektrische Energie, zu einer Erhöhung eines Flüssigkeitsdrucks verwendet und insbesondere eine unter Druck stehende Flüssigkeit zu einer Umwandlung in mechanische Arbeit, insbesondere mittels eines Hydraulikzylinders, bereitstellt. Unter einer "Pneumatikaktoreinheit" soll insbesondere eine Aktoreinheit verstanden werden, welche in zumindest einem Betriebszustand eine zugeführte Energie, vorzugsweise eine elektrische Energie, zu einer Erhöhung eines Gasdrucks verwendet und insbesondere ein unter Druck stehendes Gas zu einer Umwandlung in mechanische Arbeit, insbesondere mittels eines Pneumatikzylinders, bereitstellt. Unter einer "Bimetallaktoreinheit" soll in diesem Zusammenhang insbesondere eine Aktoreinheit verstanden werden, welche in zumindest einem Betriebszustand mittels zumindest eines Bimetallelements eine mechanische Bewegung erzeugt. Insbesondere umfasst die Bimetallaktoreinheit zumindest ein Heizelement zu einer Beheizung des Bimetallelements. Unter einer "Piezoaktoreinheit" soll insbesondere eine Aktoreinheit verstanden werden, welche in zumindest einem Betriebszustand eine mechanische Bewegung durch Verwendung des inversen Piezoeffekts bewirkt. Unter einer "Magnetostriktionaktoreinheit" soll insbesondere eine Aktoreinheit verstanden werden, welche in zumindest einem Betriebszustand eine mechanische Bewegung durch Verwendung des Effekts der Magnetostriktion bewirkt. Unter einer "Dehnstoffaktoreinheit" soll in diesem Zusammenhang insbesondere eine Aktoreinheit verstanden werden, welche in zumindest einem Betriebszustand eine mechanische Bewegung durch einen Phasenübergang eines Dehnstoffs, insbesondere eines Öls und/oder eines Wachses und/oder eines Hartparaffins, bewirkt. Insbesondere umfasst die Dehnstoffaktoreinheit zumindest ein Heizelement zu einer Beheizung des Dehnstoffs. Unter einer "Formgedächtnisaktoreinheit" soll insbesondere eine Aktoreinheit verstanden werden, welche zu einer Erzeugung einer mechanischen Bewegung zumindest ein Element aus einer Formgedächtnislegierung aufweist. Insbesondere umfasst die Formgedächtnisaktoreinheit zumindest ein Heizelement zu einer Beheizung der Formgedächtnislegierung. Hierdurch kann eine vorteilhafte Steuer- und/oder Regelbarkeit der zumindest einen Eigenschaft der Wischeinheit erreicht werden. Ferner kann auf bereits bestehende Systeme zurückgegriffen werden.

In einer besonders bevorzugten Ausgestaltung wird vorgeschlagen, dass die Wischvorrichtung wenigstens eine Druckkenngrößenmesseinheit aufweist, welche dazu vorgesehen ist, wenigstens eine flächenbezogene Normalkraftkenngröße zu messen. Unter einer "Normalkraftkenngröße" soll insbesondere eine eine senkrecht auf eine Fläche wirkende Kraft kennzeichnende Größe verstanden werden. Bei der Druckkenngrößenmesseinheit kann es sich um eine beliebige, dem Fachmann als sinnvoll erscheinende Druckkenngrößenmesseinheit handeln, insbesondere eine direkte Druckmesseinheit, welche unmittelbar eine auf eine Testfläche wirkende Kraft misst, und vorzugsweise eine piezoresistive Druckmesseinheit. Hierdurch kann eine Erfassung von für einen Wischbetrieb besonders wichtigen Parametern ermöglicht werden. Insbesondere kann ein Regelkreis bereitgestellt werden, welcher eine flächenbezogene Normalkraft auf einen optimalen Wert einregelt.
Wenn die Druckkenngrößenmesseinheit dazu vorgesehen ist, eine Luftanströmdruckkenngröße zu messen, können auf vorteilhaft einfache Weise neben einem Fahrtwind als Maß für eine Fahrgeschwindigkeit auch zusätzlich auftretende Winde, insbesondere Gegenwinde, berücksichtigt werden. Ferner kann ein Regelkreis bereitgestellt werden, welcher den Luftanströmungsdruck auf einen optimalen Wert einregelt, insbesondere zu einer Reduzierung eines Luftwiderstandsbeiwerts und zu einem Sicherstellen eines ausreichend hohen Wischblattanpressdrucks. Unter einer "Luftanströmdruckkenngröße" soll insbesondere eine einen Luftanströmdruck kennzeichnende Größe verstanden werden. Die Drucckenngrößenmesseinheit kann in diesem Fall insbesondere zumindest teilweise einstückig mit einem Spoilerelement ausgebildet und vorzugsweise im Spoilerelement integriert sein. Insbesondere kann das Spoilerelement zu einer Messung des Luftanströmdrucks durch den Luftanströmdruck zumindest wesentlich bewegt und/oder verformt werden. Unter "zumindest wesentlich bewegt und/oder verformt" soll in diesem Zusammenhang insbesondere um wenigstens 0,25 mm, insbesondere um zumindest 0,5 mm, vorzugsweise um mindestens 0,75 mm und besonders vorteilhaft um wenigstens 1 mm bewegt und/oder in eine Richtung verformt verstanden werden.

In einer weiteren Ausgestaltung wird vorgeschlagen, dass die Druckkenngrößenmesseinheit dazu vorgesehen ist, eine Wischblattanpressdruckkenngröße zu messen. Unter einer "Wischblattanpressdruckkenngröße" soll insbesondere eine einen Wischblattanpressdruck kennzeichnende Größe verstanden werden. Insbesondere kann die Druckkenngrößenmesseinheit insbesondere wenigstens einen Abstandsmesser aufweisen und als Wischblattanpressdruckkenngröße einen Abstand einer Einheit oder eines Elements von der zu wischenden Oberfläche messen, wobei insbesondere über eine bekannte Elastizitätskonstante und/oder Biegesteifigkeit der Wischleiste der Wischblattanpressdruck bestimmbar ist. Hierdurch kann ein Regelkreis bereitgestellt werden, welcher den Wischblattanpressdruck auf einen optimalen Wert einregelt. Insbesondere kann eine maximale Leistung einer Wischarmantriebseinheit reduziert werden, da diese insbesondere nicht mehr auf einen potentiell maximal auftretenden Wischblattanpressdruck ausgelegt sein muss. Hierdurch können Kosten und ein Bauraumbedarf gesenkt werden. Ferner kann ein Energieverbrauch reduziert werden.

Ferner wird ein Verfahren mit einer Wischvorrichtung vorgeschlagen, welche zumindest eine an einem Wischarm und/oder an einem Wischblatt angeordnete Wischeinheit aufweist, welche insbesondere ein Spoilerelement und/oder eine Wischleiste und/oder eine Federleiste umfasst, bei dem eine Eigenschaft der Wischeinheit abhängig von wenigstens einem Parameter zumindest teilautomatisiert eingestellt wird. Hierdurch kann eine Wischvorrichtung vorteilhaft weiterentwickelt werden.

### Zeichnung

Weitere Vorteile ergeben sich aus der folgenden Zeichnungsbeschreibung. In der Zeichnung sind vier Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Wischarm und ein Wischblatt mit einer Wischvorrichtung, welche eine Wischeinheit mit zwei Spoilerelementen, eine Stelleinheit und eine Druckkenngrößenmesseinheit zu einer Messung eines Luftanströmdrucks umfasst, in einer Draufsicht,
- Fig. 2: einen Teil des Wischblatts aus Fig. 1 in einer Schnittdarstellung entlang eine Linie II-II in Fig. 1,
- Fig. 3: einen Teil eines weiteren Wischblatts mit einer alternativen Wischvorrichtung in einer Schnittdarstellung,
- Fig. 4: einen Wischarm und ein weiteres Wischblatt mit einer alternativen Wischvorrichtung, welche eine Wischeinheit mit zwei Spoilerelementen, eine Stelleinheit mit sechs Aktoreinheiten und vier Druckkenngrößenmesseinheiten zu einer Messung eines Luftanströmdrucks umfasst, in einer Draufsicht,
- Fig. 5: einen Teil des Wischblatts aus Fig. 4 in einer Schnittdarstellung entlang einer Linie V-V in Fig. 4,
- Fig. 6: einen Wischarm und ein Wischblatt mit einer weiteren Wischvorrichtung, welche eine Wischeinheit mit einer Wischleiste und eine Stelleinheit umfasst, in einer Draufsicht und
- Fig. 7: einen Teil des Wischblatts aus Fig. 6 in einer Schnittdarstellung entlang einer Linie VII-VII in Fig. 6.

### Beschreibung der Ausführungsbeispiele

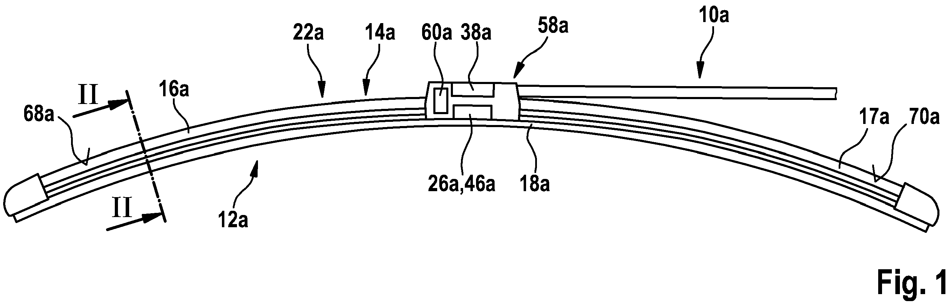

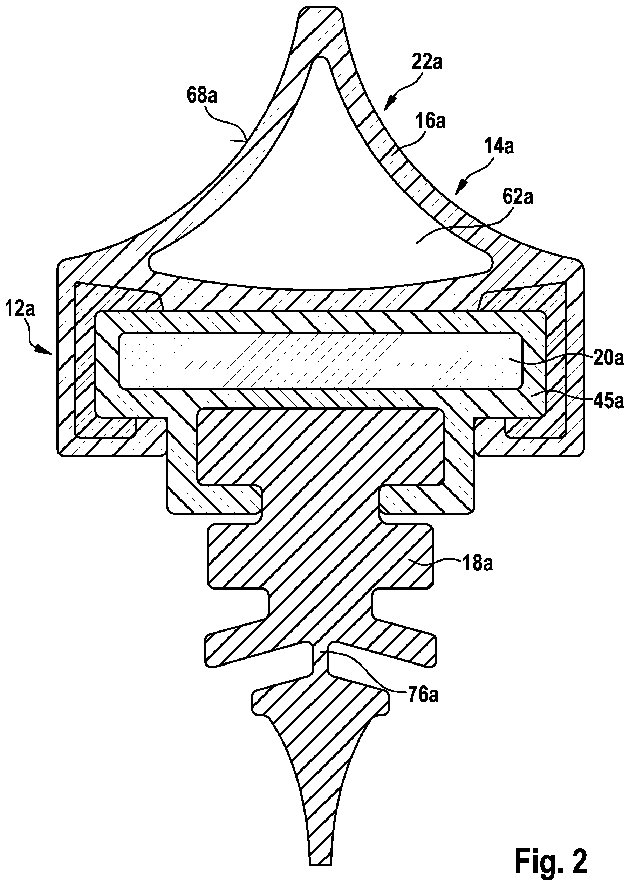

Figur 1 zeigt einen Scheibenwischer mit einem Wischarm 10a und einem Wischblatt 12a in einer Draufsicht. Das Wischblatt 12a umfasst eine Federleiste 20a, eine Wischleiste 18a und ein Halteelement 45a (vgl. Figur 2). Das Wischblatt 12a umfasst ferner eine Wischvorrichtung mit einer Wischeinheit 14a. Die Wischeinheit 14a ist am Wischblatt 12a angeordnet. Die Wischeinheit 14a umfasst zwei Spoilerelemente 16a, 17a. Die Wischvorrichtung weist ferner eine Stelleinheit 22a auf, welche dazu vorgesehen ist, zumindest eine Eigenschaft der Wischeinheit 14a abhängig von wenigstens einem Parameter zumindest teilautomatisiert einzustellen. Die Stelleinheit 22a weist ein als Aktoreinheit 26a ausgebildetes Stellglied 46a auf. Die Aktoreinheit 26a ist innerhalb eines Wischblattadapters 58a des Wischblatts 12a angeordnet. Die Stelleinheit 22a umfasst ferner eine Steuereinheit 60a, welche dazu vorgesehen ist, die Aktoreinheit 26a zu steuern. Die Steuereinheit 60a liest hierzu in einem Betriebszustand ein elektronisches Messsignal einer Druckkenngrößenmesseinheit 38a der Wischvorrichtung aus. Die Druckkenngrößenmesseinheit 38a ist im Wischblattadapter 58a angeordnet. Die Druckkenngrößenmesseinheit 38a ist dazu vorgesehen, eine flächenbezogene Normalkraft zu messen. Bei der flächenbezogenen Normalkraft handelt es sich um einen Luftanströmdruck. Die Steuereinheit 60a führt demnach in einem Betriebszustand ein Verfahren aus, bei dem eine Eigenschaft der Wischeinheit 14a abhängig von wenigstens einem Parameter zumindest teilautomatisiert eingestellt wird. Die Aktoreinheit 26a, die Druckkenngrößenmesseinheit 38a und die Steuereinheit 60a werden über entlang des Wischarms 10a verlegte Kabel mit elektrischer Energie versorgt (in den Figuren der Übersichtlichkeit halber nicht dargestellt). Alternativ oder zusätzlich ist auch eine induktive Energieversorgung denkbar.

Figur 2 zeigt einen Teil des Wischblatts 12a in einer Schnittdarstellung entlang einer Linie II-II in Figur 1. Die Spoilerelemente 16a, 17a der Wischeinheit 14a sind jeweils einstückig ausgebildet. Die Spoilerelemente 16a, 17a sind jeweils aus einem zumindest teilweise elastischen Material, insbesondere aus einem Kunststoff und vorzugsweise aus einem Gummi, gebildet. Die Spoilerelemente 16a, 17a weisen jeweils einen geschlossenen Hydraulikkanal 62a auf. Die Hydraulikkanäle 62a nehmen in einem montierten Zustand jeweils eine Hydraulikflüssigkeit auf. Die Aktoreinheit 26a umfasst einen Flüssigkeitskompressor, welcher über zumindest eine Hydraulikleitung mit den Hydraulikkanälen 62a verbunden ist (in den Figuren der Übersichtlichkeit halber nicht dargestellt). In einem Betriebszustand ist die Aktoreinheit 26a zu einer Einstellung eines Fluiddrucks der Hydraulikflüssigkeit vorgesehen. Aufgrund einer Elastizität der Spoilerelemente 16a, 17a kann hierdurch jeweils eine äußere Form und/oder ein Anstellwinkel der Spoilerelemente 16a, 17a der Wischeinheit 14a eingestellt werden. Alternativ kann anstatt der Aktoreinheit 26a mit dem Flüssigkeitskompressor auch eine Aktoreinheit mit einem Gaskompressor zum Einsatz kommen. In diesem Fall weisen Spoilerelemente jeweils einen geschlossenen Pneumatikkanal auf und der Gaskompressor ist mit den Pneumatikkanälen über zumindest eine Pneumatikleitung verbunden. Ferner ist darüber hinaus denkbar, dass Spoilerelemente jeweils über zwei oder mehr Hydraulik- und/oder Pneumatikkanäle verfügen. Eine Einstellung der äußeren Form und/oder des Anstellwinkels der Wischeinheit 14a wird durch die Stelleinheit 22a unter Berücksichtigung des durch die Druckkenngrößenmesseinheit 28a ermittelten Luftanströmdrucks vorgenommen. Hierzu wertet die Steuereinheit 60a das Messsignal der Druckkenngrößenmesseinheit 38a aus und steuert und/oder regelt die Aktoreinheit 26a entsprechend. Somit können die Eigenschaften der Wischeinheit 14a insbesondere in Echtzeit derart eingestellt werden, dass ein Wischblattanpressdruck auf eine zu wischende Oberfläche in einem optimalen Bereich gehalten wird. Alternativ oder zusätzlich können als Parameter neben dem Luftanströmdruck auch eine Fahrgeschwindigkeit eines den Scheibenwischer aufweisenden Fahrzeugs und/oder eine Luftanströmgeschwindigkeit und/oder ein Wischblattanpressdruck und/oder ein Wischwinkel und/oder eine Wischgeschwindigkeit und/oder eine Wischfrequenz und/oder eine anfallende, über einen Regensensor gemessene Flüssigkeitsmenge und/oder eine Umgebungstemperatur berücksichtigt und durch eine Steuereinheit verarbeitet werden.

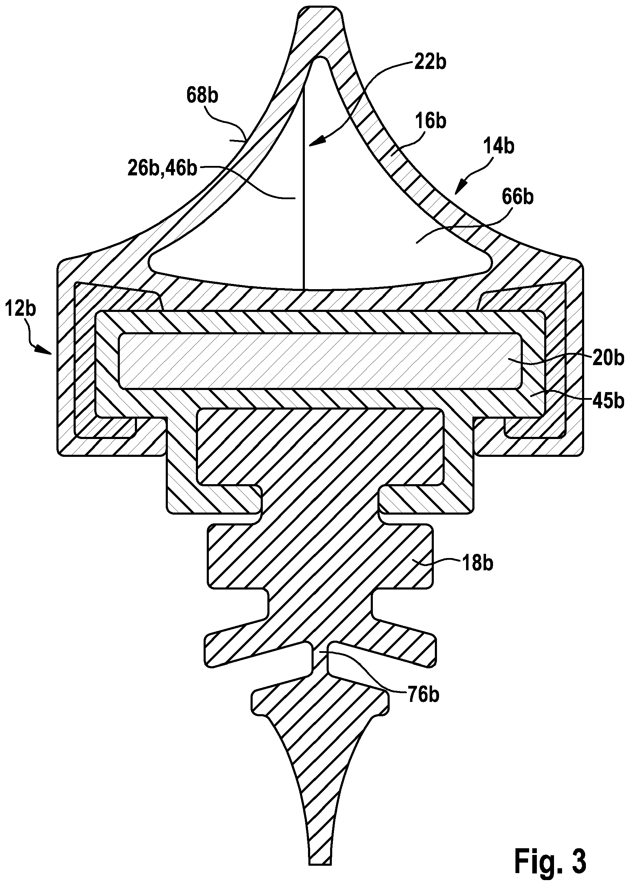

In den Figuren 3 bis 7 sind drei weitere Ausführungsbeispiele gezeigt. Die nachfolgenden Beschreibungen beschränken sich im Wesentlichen auf die Unterschiede zwischen den Ausführungsbeispielen, wobei bezüglich gleichbleibender Bauteile, Merkmale und Funktionen auf die Beschreibung der anderen Ausführungsbeispiele, insbesondere der Figuren 1 und 2, verwiesen werden kann. Zur Unterscheidung der Ausführungsbeispiele ist der Buchstabe a in den Bezugszeichen des Ausführungsbeispiels in den Figuren 1 und 2 durch die Buchstaben b, c und d in den Bezugszeichen der Ausführungsbeispiele der Figuren 3 bis 7 ersetzt. Bezüglich gleich bezeichneter Bauteile, insbesondere in Bezug auf Bauteile mit gleichen Bezugszeichen, kann grundsätzlich auch auf die Figuren und/oder die Beschreibung der anderen Ausführungsbeispiele, insbesondere der Figuren 1 und 2, verwiesen werden.
Figur 3 zeigt einen Teil eines alternativen Wischblatts 12b in einer Schnittdarstellung. Das Wischblatt 12b umfasst eine Wischvorrichtung mit einer Wischeinheit 14b und einer Stelleinheit 22b. Die Wischeinheit 14b weist zwei Spoilerelemente 16b, 17b auf. Die Spoilerelemente 16b, 17b sind jeweils aus einem zumindest teilweise elastischen Material, insbesondere aus einem Kunststoff und vorzugsweise aus einem Gummi, gebildet. Die Spoilerelemente 16b, 17b weisen jeweils einen Einbaukanal 66b auf. Die Stelleinheit 22b umfasst eine Aktoreinheit 26b, welche im Einbaukanal 66b des Spoilerelements 16b angeordnet ist (in Figur 3 lediglich schematisch dargestellt). Die Stelleinheit 22b umfasst ferner zumindest eine weitere Aktoreinheit, welche im Einbaukanal des Spoilerelements 17b angeordnet ist (nicht dargestellt). Die Aktoreinheit 26b ist dazu vorgesehen, eine Außenform des Spoilerelements 16b, insbesondere eine Steilheit einer Flanke 68b des Spoilerelements 16b, unter Berücksichtigung einer Fahrgeschwindigkeit eines das Wischblatt 12b aufweisenden Kraftfahrzeugs anzupassen. Entsprechendes gilt für die weitere, im Spoilerelement 17b angeordnete Aktoreinheit und insbesondere für eine Flanke 70b des Spoilerelements 17b. Zusätzlich kann die Stelleinheit 22b noch weitere Aktoreinheiten umfassen, welche insbesondere gleichmäßig entlang der Einbaukanäle 66b der Spoilerelemente 16b, 17b angeordnet sein können. Bei den Aktoreinheiten 26b kann es sich um beliebige, dem Fachmann als sinnvoll erscheinende Aktoreinheiten 26b handeln. Im vorliegenden Fall umfassen die Aktoreinheiten 26b jeweils einen Schrittmotor. Die Wischvorrichtung umfasst eine Steuereinheit 60b, welche in einem Betriebszustand ein Messsignal einer Tachometereinheit des Kraftfahrzeugs ausliest (in Figur 3 nicht dargestellt). Die Steuereinheit 60b ist in einem Wischblattadapter 58b des Wischblatts 12b angeordnet. Alternativ kann eine Steuereinheit auch in einem der Einbaukanäle 60b der Spoilerelemente 16b, 17b oder am Kraftfahrzeug selbst, insbesondere zumindest teilweise in einer Wischarmantriebseinheit, angeordnet sein. Signalleitungen sowie elektrische Versorgungsleitungen sind in den Einbaukanälen 60b der Spoilerelemente 16b, 17b verlegt (der Übersichtlichkeit halber in Figur 3 nicht dargestellt). Abhängig von einer Fahrgeschwindigkeit des Kraftfahrzeugs steuert und/oder regelt die Steuereinheit 60b die Aktoreinheiten 26b. Es hat sich insbesondere als sinnvoll erwiesen, dass Flanken 68b, 70b der Spoilerelemente 16b, 17b bei niedrigen Fahrgeschwindigkeiten flacher und bei hohen Fahrgeschwindigkeiten steiler gestellt werden. Alternativ oder zusätzlich können als Parameter neben der Fahrgeschwindigkeit des Kraftfahrzeugs auch ein Luftanströmdruck und/oder eine Luftanströmgeschwindigkeit und/oder ein Wischblattanpressdruck und/oder ein Wischwinkel und/oder eine Wischgeschwindigkeit und/oder eine Wischfrequenz und/oder eine anfallende, über einen Regensensor gemessene Flüssigkeitsmenge und/oder eine Umgebungstemperatur berücksichtigt und durch eine Steuereinheit verarbeitet werden.

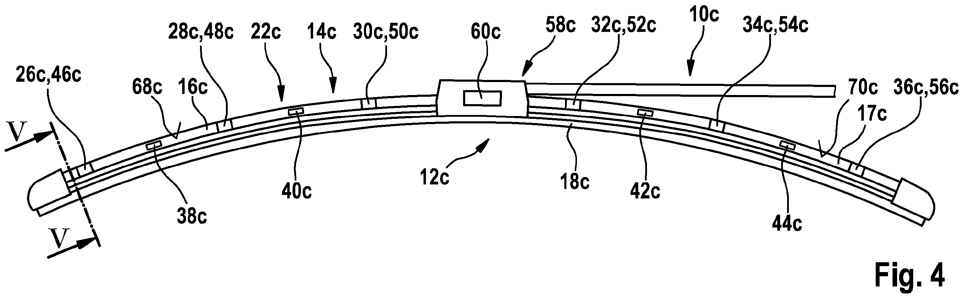

Figur 4 zeigt einen weiteren Scheibenwischer mit einem Wischarm 10c und einem Wischblatt 12c in einer Draufsicht. Das Wischblatt 12c umfasst eine Wischvorrichtung mit einer Wischeinheit 14c. Die Wischeinheit 14c umfasst zwei Spoilerelemente 16c, 17c. Die Wischvorrichtung weist ferner eine Stelleinheit 22c auf, welche dazu vorgesehen ist, zumindest eine Eigenschaft der Wischeinheit 14c abhängig von wenigstens einem Parameter zumindest teilautomatisiert einzustellen. Die Stelleinheit 22c weist sechs als Aktoreinheiten 26c, 28c, 30c, 32c, 34c, 36c ausgebildete Stellglieder 46c, 48c, 50c, 52c, 54c, 56c auf. Die Stelleinheit 22c umfasst ferner eine Steuereinheit 60c, welche dazu vorgesehen ist, die Aktoreinheiten 26c, 28c, 30c, 32c, 34c, 36c zu steuern. Die Steuereinheit 60c ist in einem Wischblattadapter 58c des Wischblatts 12c angeordnet. Die Steuereinheit 60c liest in einem Betriebszustand elektronische Messsignale von Drucckenngrößenmesseinheiten 38c, 40c, 42c, 44c der Wischvorrichtung aus. Die Druckkenngrößenmesseinheiten 38c, 40c, 42c, 44c sind jeweils dazu vorgesehen, einen Luftanströmdruck zu messen.

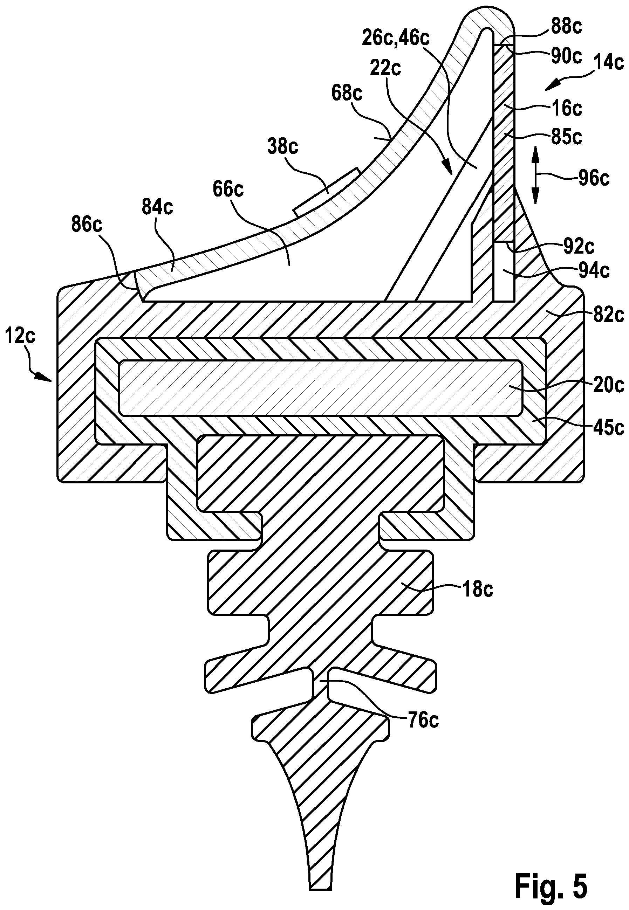

Figur 5 zeigt einen Teil des Wischblatts 12c in einer Schnittdarstellung entlang einer Linie V-V in Figur 4. Die Spoilerelemente 16c, 17c weisen jeweils einen asymmetrischen Querschnitt auf. Die Spoilerelemente 16c, 17c umfassen jeweils einen Grundkörper 82c, einen Windleitkörper 84c und einen Gleitkörper 85c. Der Grundkörper 82c, der Windleitkörper 84c und der Gleitkörper 85c der Spoilerelemente 16c, 17c sind einstückig ausgebildet. Die Spoilerelemente 16c, 17c sind jeweils in einem Zweikomponentenspritzverfahren hergestellt. Der Grundkörper 82c und der Gleitkörper 85c bestehen jeweils aus einem Material mit einer geringeren Elastizität als der Windleitkörper 84c. Der Grundkörper 82c ist jeweils fest, insbesondere mittels eines Hintergriffs, an einem eine Federleiste 20c umschließenden Halteelement 45c des Wischblatts 12c befestigt. Der Windleitkörper 84c ist jeweils an einer ersten Längsseite 86c stoffschlüssig mit dem Grundkörper 82c verbunden. Eine zweite Längsseite 88c des Windleitkörpers 84c ist jeweils stoffschlüssig mit einer ersten Längsseite 90c des Gleitkörpers 85c verbunden. Eine zweite Längsseite 92c des Gleitkörpers 85c ist in einem montierten Zustand jeweils zumindest teilweise in eine spezielle Aufnahme 94c des Grundkörpers 82c gesteckt. Die Aufnahme 94c ist jeweils passgenau auf die zweite Längsseite 92c des Gleitkörpers 85c abgestimmt. Die zweite Längsseite 92c des Gleitkörpers 85c ist jeweils in der Aufnahme 94c entlang einer Richtung 96c beweglich angeordnet. Die Spoilerelemente 16c, 17c bilden jeweils einen Einbaukanal 66c. Die Aktoreinheiten 26c, 28c, 30c, 32c, 34c, 36c sind in den Einbaukanälen 66c der Spoilerelemente 16c, 17c angeordnet. Ferner sind Stromversorgungs- und/oder Signalleitungen in den Einbaukanälen 66c verlegt (in den Figuren der Übersichtlichkeit halber nicht dargestellt). Die Aktoreinheiten 26c, 28c, 30c, 32c, 34c, 36c, von denen in Figur 5 lediglich eine sichtbar und rein schematisch dargestellt ist, sind dazu vorgesehen, eine Eintauchtiefe des Gleitkörpers 85c in die Aufnahme 94c festzulegen. Bei den Aktoreinheiten 26c, 28c, 30c, 32c, 34c, 36c kann es sich um beliebige, dem Fachmann als sinnvoll erscheinende Aktoreinheiten 26c, 28c, 30c, 32c, 34c, 36c handeln. Im vorliegenden Fall umfassen die Aktoreinheiten 26c, 28c, 30c, 32c, 34c, 36c jeweils einen Schrittmotor. Die Druckkenngrößenmesseinheiten 38c, 40c, 42c, 44c, von denen in Figur 5 lediglich eine sichtbar und rein schematisch dargestellt ist, sind an von den Windleitkörpern 84c ausgebildeten Flanken 68c, 70c der Spoilerelemente 16c, 17c angeordnet, insbesondere stoffschlüssig mit diesen verbunden. Die Steuereinheit 60c wertet in einem Betriebszustand die Messsignale der Drucckenngrößenmesseinheiten 38c, 40c, 42c, 44c aus und steuert und/oder regelt die Aktoreinheiten 26c, 28c, 30c, 32c, 34c, 36c derart, dass der Luftanströmdruck in einem jeweiligen Bereich der Druckkenngrößenmesseinheiten 38c, 40c, 42c, 44c in einem optimalen Bereich liegt. Hierbei ist insbesondere denkbar, dass die Aktoreinheiten 26c, 28c, 30c, 32c, 34c, 36c in einer voneinander unabhängigen Art durch die Steuereinheit 60c angesteuert werden. Somit können die Eigenschaften der Wischeinheit 14c insbesondere in Echtzeit derart eingestellt werden, dass ein Wischblattanpressdruck auf eine zu wischende Oberfläche in einem optimalen Bereich gehalten wird. Alternativ oder zusätzlich können als Parameter neben dem Luftanströmdruck auch eine Fahrgeschwindigkeit eines den Scheibenwischer aufweisenden Fahrzeugs und/oder eine Luftanströmgeschwindigkeit und/oder ein Wischblattanpressdruck und/oder ein Wischwinkel und/oder eine Wischgeschwindigkeit und/oder eine Wischfrequenz und/oder eine anfallende, über einen Regensensor gemessene Flüssigkeitsmenge und/oder eine Umgebungstemperatur berücksichtigt und durch eine Steuereinheit verarbeitet werden.

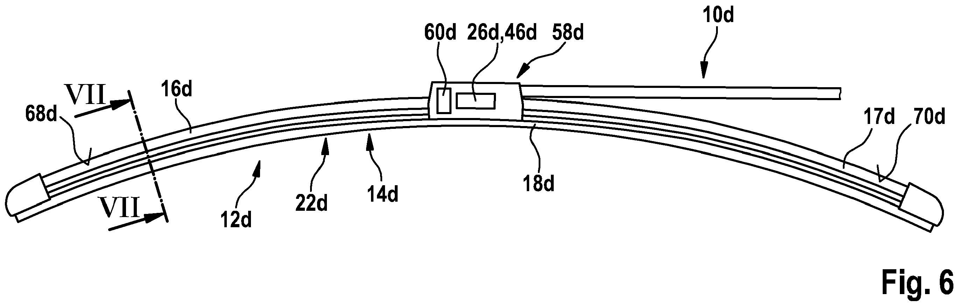

Figur 6 zeigt einen weiteren Scheibenwischer mit einem Wischarm 10d und einem Wischblatt 12d in einer Draufsicht. Das Wischblatt 12d umfasst eine Wischvorrichtung mit einer Wischeinheit 14d. Die Wischeinheit 14d umfasst eine Wischleiste 18d. Die Wischvorrichtung weist ferner eine Stelleinheit 22d auf, welche dazu vorgesehen ist, zumindest eine Eigenschaft der Wischeinheit 14d abhängig von wenigstens einem Parameter zumindest teilautomatisiert einzustellen. Die Stelleinheit 22d weist ein als eine Aktoreinheit 26d ausgebildetes Stellglied 46d auf. Die Aktoreinheit 26d ist innerhalb eines Wischblattadapters 58d des Wischblatts 12d angeordnet. Die Stelleinheit 22d umfasst ferner eine Steuereinheit 60d, welche dazu vorgesehen ist, die Aktoreinheit 26d zu steuern. Die Steuereinheit 60d ist im Wischblattadapter 58d des Wischblatts 12d angeordnet.

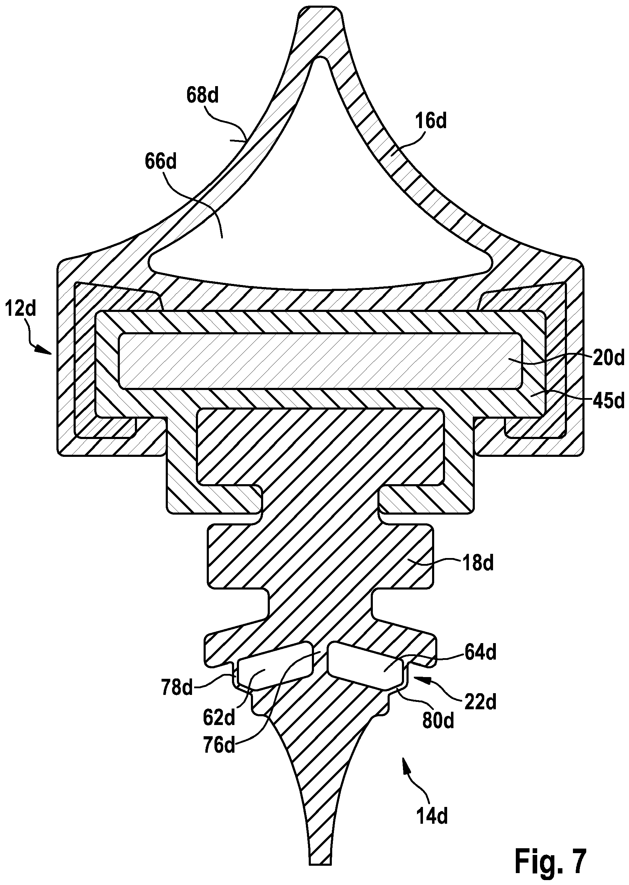

Figur 7 zeigt einen Teil des Wischblatts 12d in einer Schnittdarstellung entlang einer Linie VII-VII in Figur 6. Die Wischleiste 18d der Wischeinheit 14d ist einstückig ausgebildet. Die Wischleiste 18d besteht aus einem zumindest teilweise elastischen Material, insbesondere aus einem synthetischen Kautschuk. Entlang eines Kippstegs 76d der Wischleiste 18d ist auf beiden Seiten des Kippstegs 76d jeweils ein geschlossener Hydraulikkanal 62d, 64d ausgebildet. Vom Kippsteg 76d abgewandte Außenwandungen 78d, 80d der Hydraulikkanäle 62d, 64d sind relativ dünn, insbesondere dünner als der Kippsteg 76d, ausgebildet. Die Hydraulikkanäle 62d, 64d nehmen in einem montierten Zustand jeweils eine Hydraulikflüssigkeit auf. Die Aktoreinheit 26d umfasst einen Flüssigkeitskompressor, welcher über zumindest eine Hydraulikleitung mit den Hydraulikkanälen 62d, 64d verbunden ist (in den Figuren der Übersichtlichkeit halber nicht dargestellt). In einem Betriebszustand ist die Aktoreinheit 26d zu einer Einstellung eines Fluiddrucks der Hydraulikflüssigkeit vorgesehen. Über den Fluiddruck ist eine Flexibilität der Wischleiste 18d der Wischeinheit 14d einstellbar. Alternativ kann anstatt der Aktoreinheit 26d mit dem Flüssigkeitskompressor auch eine Aktoreinheit mit einem Gaskompressor zum Einsatz kommen. In diesem Fall weist eine Federleiste zwei geschlossene Pneumatikkanäle auf und der Gaskompressor ist mit den Pneumatikkanälen über zumindest eine Pneumatikleitung verbunden. Eine Einstellung dieser Eigenschaft der Wischeinheit 14d wird durch die Stelleinheit 22d unter Berücksichtigung zumindest eines Parameters vorgenommen. Als Parameter kommen hierbei eine Fahrgeschwindigkeit eines den Scheibenwischer aufweisenden Fahrzeugs und/oder ein Wischblattanpressdruck und/oder eine Luftanströmgeschwindigkeit und/oder ein Luftanströmdruck und/oder ein Wischwinkel und/oder eine Wischgeschwindigkeit und/oder eine Wischfrequenz und/oder eine anfallende, über einen Regensensor gemessene Flüssigkeitsmenge und/oder eine Umgebungstemperatur in Frage. Die Steuereinheit 60d steuert und/oder regelt die Aktoreinheit 26d entsprechend, wobei die Steuereinheit 60d für den zumindest einen Parameter charakteristische Messsignale aus einer entsprechenden Messeinheit ausliest.

## Patentansprüche

1. Wischvorrichtung für ein Kraftfahrzeug, mit zumindest einer an einem Wischarm (10a; 10b; 10c; 10d) und/oder an einem Wischblatt (12a; 12b; 12c; 12d) angeordneten Wischeinheit (14a; 14b; 14c; 14d), welche ein Spoilerelement (16a, 17a; 16b, 17b; 16c, 17c; 16d, 17d), eine Wischleiste (18a; 18b; 18c; 18d) und/oder eine Federleiste (20a; 20b; 20c; 20d) umfasst, **gekennzeichnet durch** wenigstens eine Stelleinheit (22a; 22b; 22c; 22d), die wenigstens eine Aktoreinheit (26a; 26b; 26c, 28c, 30c, 32c, 34c, 36c; 26d) umfasst und dazu vorgesehen ist, eine Aussenform des Spoilerelements (16b), insbesondere eine Steilheit einer Flanke (68b) des Spoilerelements (16b), unter Berücksichtigung einer Fahrgeschwindigkeit des Kraftfahrzeugs anzupassen.

## Claims

1. Wiper device for a motor vehicle, with at least one wiper unit (14a; 14b; 14c; 14d) which is arranged on a wiper arm (10a; 10b; 10c; 10d) and/or on a wiper blade (12a; 12b; 12c; 12d) and comprises a spoiler element (16a, 17a; 16b, 17b; 16c, 17c; 16d, 17d), a wiper strip (18a; 18b; 18c; 18d) and/or a spring strip (20a; 20b; 20c; 20d), **characterized by** at least one adjustment unit (22a; 22b; 22c; 22d) which comprises at least one actuator unit (26a; 26b; 26c, 28c, 30c, 32c, 34c, 36c; 26d) and is provided to adapt an outer shape of the spoiler element (16b), in particular a steepness of a flank (68b) of the spoiler element (16b), with reference to a driving speed of the motor vehicle.

## Revendications

1. Dispositif d'essuie-glace pour un véhicule automobile, comprenant au moins une unité d'essuie-glace (14a ; 14b ; 14c ; 14d) disposée au niveau d'un bras d'essuie-glace (10a ; 10b ; 10c ; 10d) et/ou au niveau d'un balai d'essuie-glace (12a ; 12b ; 12c ; 12d), qui comprend un élément de déflecteur (16a, 17a ; 16b, 17b ; 16c, 17c ; 16d, 17d), une raclette de balai d'essuie-glace (18a ; 18b ; 18c ; 18d) et/ou une raclette à ressort (20a ; 20b ; 20c ; 20d), **caractérisé par** au moins une unité de réglage (22a ; 22b ; 22c ; 22d) qui comprend au moins une unité d'actionneur (26a ; 26b ; 26c, 28c, 30c, 32c, 34c, 36c ; 26d) et qui est prévue pour adapter une forme extérieure de l'élément de déflecteur (16b), en particulier une inclinaison d'un flanc (68b) de l'élément de déflecteur (16b), en tenant compte d'une vitesse de conduite du véhicule automobile.
